# EUROPEAN PATENT SPECIFICATION

(11) **EP 0 792 909 B1**
(45) Date of publication and mention of the grant of the patent: **25.04.2001**
(21) Application number: 97301351.9
(22) Date of filing: 28.02.1997
(51) Int. Cl.: C08K 5/29, C09D 167/02, C09D 167/06, C09D 175/06

(54) **Manufacture of coated metal articles**
Herstellung von beschichteten Metallgegenständen
Procédé de fabrication des objets métalliques revêtus

(30) Priority: 29.02.1996 JP 6903396
(43) Date of publication of application: 03.09.1997
(73) Proprietor: NISSHINBO INDUSTRIES INC., Chuo-ku, Tokyo (JP)
(72) Inventor: Imashiro, Yasuo, Tokyo Res.Ctr., Nisshinbo Ind.Inc, Adachi-ku, Tokyo (JP); Takahashi, Ikuo, Tokyo Res.Ctr., Nisshinbo Ind.Inc, Adachi-ku, Tokyo (JP); Horie, Naofumi, Tokyo Res.Ctr., Nisshinbo Ind.Inc, Adachi-ku, Tokyo (JP); Yamane, Takeshi Tokyo Res.Ctr., Nisshinbo Ind.Inc, Adachi-ku, Tokyo (JP)
(74) Representative: Stuart, Ian Alexander

(56) References cited:
- EP-A- 0 628 582
- US-A- 4 612 054
- US-A- 4 952 621
- US-A- 5 276 096

## Description

This invention relates to use of a coating composition in the manufacture of a precoated iron or stainless steel sheet which is then worked to form a shaped coated product. A preferred embodiment employs a coating composition which forms a coating having improved adhesion, chemical resistance and water resistance so that the precoated metal sheets are useful in the production of exterior members of electric appliances and buildings.

The precoated metal technology is to previously coat metal sheets such as iron sheets, aluminum sheets, galvanized sheets, and stainless steel sheets with paint before the metal sheets are mechanically worked into complex shapes as by die pressing, bending, embossing, rolling, and drawing. This technology has been widely employed for decades because surfaces of complex shape can have a uniform coating of paint.

In the precoated metal technology, coating is followed by working and assembling steps. Coating compositions used in the precoated metal technology are required to tolerate impacts encountered upon shaping as by bending, rolling and embossing and possess firm adhesion to and coverage on sheet metal. They are sometimes required to be resistant to mar and stain. For outdoor use, they are required to be weather resistant.

Prior art metal precoating compositions are based on aminoalkyd resins, aminoacrylic resins, and epoxy resins. Recently used are polyurethane resins from which precoated metal featuring improved working is obtained.

Most of these coating resins used in the manufacture of precoated metal sheets are ester group-containing resins. When coatings based on ester group-containing resins are applied to outdoor use articles, the coating resin can be degraded by hydrolysis, losing aesthetic appearance. There is a desire to overcome this problem.

US-A-4 952 621 discloses a coating composition formed from (a) a urethane-based prepolymer made from a polyester polyol, (b) a curing agent, (c) a silane and (d) a carbodiimide.

US-A-5 276 096 discloses a coating composition formed from an acrylic resin, a solvent, a carbodiimide and other components.

US-A-4 612 054 discloses steel panels coated with a paint formed from a carbodiimide, an organic carboxylate and a solvent.

EP-A-0 628 582 discloses the use of carbodiimides for crosslinking coating binding polymers. The polymers may be polyesters. The use of the compositions to coat aluminium is exemplified.

In connection with a solvent type coating composition comprising a resin having an ester group in a molecule, we have found that by blending a carbodiimide compound having a least one carbodiimide group in a molecule (that is, mono- or poly-carbodiimide compound) in the composition, one may obtain a metal precoating composition capable of forming a coating having chemical resistance, adhesion, strain resistance and water resistance. The coating preferably substantially inhibits degradation of the ester group-containing resin by hydrolysis. When the coating is applied to an outdoor use article, the deterioration of the aesthetic appearance is prevented or ameliorated.

According to the present invention, there is provided a method of manufacturing a shaped coated iron or stainless steel artefact comprising
applying a coating composition comprising a resin having an ester group in a molecule, at least one of mono- and poly-carbodiimide compounds, and a solvent to an iron or stainless steel sheet to form a pre-coated sheet; and
mechanically working said pre-coated sheet by die pressing, bending, embossing, rolling or drawing.

The resins having an ester group include
(i) polyester resins formed from polyhydric alcohols such as ethylene glycol, diethylene glycol, propylene glycol, dipropylene glycol, polypropylene glycol, neopentyl glycol, butane diol, pentane diol, hexane diol, cyclohexane diol, cyclohexane dimethanol, 2,2-dimethyl-3-hydroxypropyl-2,2-dimethyl-3-hydroxypropionate, polytetramethylene ether glycol, polycaprolactone polyol, glycerin, sorbitol, anisol, trimethylol ethane, trimethylol propane, trimethylol butane, hexane triol, and nonane diol and polybasic acids such as phthalic acid, phthalic anhydride, tetrahydrophthalic acid, tetrahydrophthalic anhydride, hexahydrophthalic acid, hexahydrophthalic anhydride, methyltetrahydrophthalic acid, methyltetrahydrophthalic anhydride, 3,6-Endo methylene-1,2,3,6-tetrahydrophthalic anhydride, trimellitic acid, trimellitic anhydride, pyromellitic acid, pyromellitic anhydride, isophthalic acid, terephthalic acid, maleic acid, maleic anhydride, fumaric acid, itaconic acid, adipic acid, azelaic acid, sebasic acid, succinic acid, succinic anhydride, lactic acid, cyclohexane-1,4-dicarboxylic acid, and Endic® anhydride (endo-cis-bicyclo-(2.21)-5-heptene-2,3-dicarboxylic anhydride);
(ii) urethane compounds formed from polyisocyanates such as 2,4-tolylene diisocyanate, 2,6-tolylene diisocyanate, xylene-1,4-diisocyanate, xylene-1,3-diisocyanate, 4,4-diphenylmethane diisocyanate, 4,4-diphenyl ether diisocyanate, and 4,4-diphenylmethane diisocyanate and polyols such as polyester polyols and polyester ether polyols as obtained by polycondensation between the above-mentioned polybasic acid and polyhydric alcohol or ring-opening polymerization of lactones; and
(iii) alkyd resins including unsaturated polyester resins.

According to the invention, a carbodiimide compound having at least one carbodiimide group in a molecule (that is, mono- or poly-carbodiimide compound) is blended in the coating composition. The carbodiimide compound may be selected from ones synthesized by well-known methods, for example, by subjecting polyisocyanates to decarboxylation reaction in the presence of 3-methyl-1-phenyl-2-phospholene-1-oxide catalyst in a solventless system or in an inert solvent at a temperature of about 70°C or higher.

Examples of the monocarbodiimide compound include dicyclohexylcarbodiimide, diisopropylcarbodiimide, dimethylcarbodiimide, diisobutylcarbodiimide, dioctylcarbodiimide, t-butylisopropylcarbodiimide, diphenylcarbodiimide, di-t-butylcarbodiimide, and di-β-naphthylcarbodiimide. Among these, dicyclohexylcarbodiimide and diisopropylcarbodiimide are preferred for ease of commercial availability.

There may be used any of polycarbodiimide compounds prepared by various methods. Most often, a choice is made among polycarbodiimide compounds which are prepared by typical conventional methods as disclosed in USP 2,941,956, JP-B 33279/1972, J. Org. Chem., 28, 2069-2075 (1963), and Chemical Review 1981, Vol. 81, No. 4, pp. 619-621. More particularly, organic diisocyanates are subject to condensation reaction with concomitant decarboxylation to synthesize isocyanate-terminated polycarbodiimides.

The organic diisocyanates used as a raw material for the synthesis of polycarbodiimide compounds include aromatic diisocyanates, aliphatic diisocyanates, alicyclic diisocyanates, and mixtures thereof, for example, 1,5-naphthylene diisocyanate, 4,4-diphenylmethane diisocyanate, 4,4-diphenyldimethylmethane diisocyanate, 1,3-phenylene diisocyanate, 1,4-phenylene diisocyanate, 2,4-tolylene diisocyanate, 2,6-tolylene diisocyanate, mixtures of 2,4-tolylene diisocyanate and 2,6-tolylene diisocyanate, hexamethylene diisocyanate, cyclohexane-1,4-diisocyanate, xylylene diisocyanate, isophorone diisocyanate, dicyclohexylmethane-4,4-diisocyanate, methylcyclohexane diisocyanate, and tetramethylxylylene diisocyanate.

During reaction of the organic diisocyanate, the molecule being formed may be controlled to an appropriate degree of polymerization using a compound capable of reacting with a terminal isocyanate, such as a monoisocyanate. Examples of the monoisocyanate used to block the end of polycarbodiimide to control its degree of polymerization include phenyl isocyanate, tolyl isocyanate, dimethylphenyl isocyanate, cyclohexyl isocyanate, butyl isocyanate, and naphthyl isocyanate. Other useful endblocking agents include active hydrogen compounds capable of reacting with an isocyanate group, for example, aliphatic, aromatic and alicyclic compounds having a -OH group such as methanol, ethanol, phenol, cyclohexanol, N-methyl ethanolamine, polyethylene glycol monomethyl ether, and polypropylene glycol monomethyl ether, compounds having a =NH group such as diethylamine and dicyclohexylamine, compounds having a -NH₂ group such as butylamine and cyclohexylamine, compounds having a -COOH group such as succinic acid, benzoic acid, and cyclohexanoic acid, compounds having a -SH group such as ethyl mercaptan, allyl mercaptan, and thiophenol, and compounds having an epoxy group.

Condensation reaction with concomitant decarboxylation of the organic diisocyanates takes place in the presence of carbodiimidizing catalysts. Exemplary catalysts are phospholene oxides such as 1-phenyl-2-phospholene-1-oxide, 3-methyl-2-phospholene-1-oxide, 1-ethyl-2-phospholene-1-oxide, and 3-methyl-1-phenyl-2-phospholene-1-oxide, and 3-phospholene isomers thereof. Among these, 3-methyl-1-phenyl-2-phospholene-1-oxide is preferred from the standpoint of reactivity. The catalyst may be used in a catalytic amount.

Preferably the carbodiimide compound is blended in a coating composition in an amount of 0.01 to 20 parts, especially 0.5 to 10 parts by weight per 100 parts by weight of the ester group-containing resin. On this basis, less than 0.01 part of the carbodiimide compound would be less effective for improving water resistance, adhesion and chemical resistance. More than 20 parts of the carbodiimide compound would detract from physical properties of a coating composition and tend to bleed out.

In the practice of the invention, the carbodiimide compound is preferably used as a solution in an organic solvent. The organic solvent used herein should preferably be non-polymerizable and free of active hydrogen for the purpose of providing a coating composition with an appropriate viscosity for application. Exemplary solvents include toluene, xylene, methyl ethyl ketone, methyl isobutyl ketone, ethyl acetate, butyl acetate, and cyclohexanone. From these organic solvents, a solvent or a mixture of solvents appropriate for the desired solubility and evaporation rate may be selected.

In addition to the above-mentioned components, an optional component or components may be added to the coating composition of the invention. Such optional components include pigments added for color hiding effect, fillers, curing catalysts, coating surface regulating agents, surfactants, dispersants, plasticizers, UV absorbers, and anti-oxidants. Exemplary pigments are titanium white, cyanine blue, chrome yellow, Watchung Red, red iron oxide, carbon black, and aniline black. These optional components are added in conventional amounts insofar as the benefits of the invention are not lost.

The coating composition of the invention is prepared by mixing the essential and optional components in the presence of an organic solvent in a mixer such as a roll mill, ball mill and pressure kneader. The composition is then obtained in the form of solvent type paint.

The organic solvent is typically used as a solution by previously dissolving the carbodiimide compound therein as mentioned above. The organic solvent may be further used as a diluent. The appropriate viscosity of a coating composition largely varies with an application method, applicator type, application speed, coating thickness, and surface state. Accordingly, the amount of the organic solvent is properly determined by taking these factors into account. It is preferred that most of the organic solvent be volatilized off from a coating by an evaporating step or forced heat drying step taken prior to curing of the coating. If a substantial fraction of the solvent is left in the coating, it can adversely affect the hardness, adhesion upon working, water resistance, and chemical resistance of the coating.

Any desired method may be used to apply the coating composition to form a thin film. For example, spray coating, roller coating, roll coating, curtain flow coating, casting and knife edge coating may be employed. For facilitated application, the coating composition may be applied at elevated temperature or under pressure.

After a coating composition is applied, the coating is optionally dried and cured or baked. Heat curing is to raise the temperature of the coating to accelerate crosslinking reaction. Use may be made of various heating means such as an electric heating oven, hot air heating oven, infrared heating oven, and high-frequency heating oven. For baking, a baking temperature and time are properly selected in consideration of the formulation of a coating composition, the size and gage of sheet metal, the capacity of a baking oven, and other factors.

There has been described a solvent type metal coating composition comprising an ester group-containing resin and a carbodiimide compound which forms on sheet metal a coating having improved properties including adhesion, chemical resistance, stain resistance, and water resistance. Even when applied to outdoor articles, the coating maintains its aesthetic appearance. The precoated metal sheets are useful in the production of metal members of electric appliances such as refrigerators, clothes washers, and vending machines and exterior metal members for buildings such as precoated galvanized sheets.

### EXAMPLE

Examples of coating compositions and their use in the first (precoating) step of the present invention are given below by way of illustration and not by way of limitation. All parts are by weight.

### Synthesis Example 1

By effecting reaction between 549 grams of m-tetramethylxylylene diisocyanate (TMXDI) and 49.5 grams of n-butyl isocyanate in the presence of 5.99 grams of a carbodiimidizing catalyst (3-methyl-1-phenyl-2-phospholene-1-oxide) at 180°C for 48 hours, m-tetramethylxylylene carbodiimide having a degree of polymerization of 10 was obtained. This carbodiimide, 100 grams, was dissolved in 100 grams of toluene to form a carbodiimide solution.

### Synthesis Example 2

By effecting reaction between 590 grams of 4,4'-dicyclohexylmethane diisocyanate (HMDI) and 62.6 grams of cyclohexyl isocyanate in the presence of 6.12 grams of a carbodiimidizing catalyst (3-methyl-1-phenyl-2-phospholene-1-oxide) at 180°C for 48 hours, 4,4'-dicyclohexylmethane carbodiimide having a degree of polymerization of 10 was obtained. This carbodiimide, 100 grams, was dissolved in 100 grams of toluene to form a carbodiimide solution.

### Synthesis Example 3

By effecting reaction between 500 grams of isophorone diisocyanate (IPDI) and 62.6 grams of cyclohexyl isocyanate in the presence of 5.63 grams of a carbodiimidizing catalyst (3-methyl-1-phenyl-2-phospholene-1-oxide) at 180°C for 20 hours, isophorone carbodiimide having a degree of polymerization of 10 was obtained. This carbodiimide, 100 grams, was dissolved in 100 grams of toluene to form a carbodiimide solution.

### Synthesis Example 4

By effecting reaction between 216 grams of toluene diisocyanate and 19.2 grams of phenyl isocyanate in 200 grams of toluene in the presence of 0.23 gram of a carbodiimidizing catalyst (3-methyl-1-phenyl-2-phospholene-1-oxide) at 135°C for 4 hours, a carbodiimide in toluene solution was obtained.

### Synthesis Example 5

### Synthesis of polyester urethane resin

A reaction system contained 346 parts of 4,4'-dicyclohexylmethane diisocyanate, 2488 parts of an aromatic polyester diol (polyester formed from isophthalic acid/terephthalic acid/adipic acid = 5/5/1 molar ratio and neopentyl glycol/1,6-hexane glycol/ethylene glycol = 2/1/2 molar ratio) having a molecular weight of 2,000, 138 parts of hexamethylene adipate polyol having a molecular weight of 2,000, 625 parts of toluene, and 1563 parts of propylene glycol monoethyl ether acetate. Reaction was done at 70°C for 5 hours. After the disappearance of the absorption peak of an isocyanate group was confirmed by IR spectroscopy, the urethane-forming reaction was terminated, obtaining a polyester urethane resin.

### Precoating Example 1 (E1)

To 100 parts of the polyester urethane resin obtained in Synthesis Example 5 was added 3.56 parts of the carbodiimide solution obtained in Synthesis Example 1. After thorough mixing, the coating composition was applied to a steel strip of 0.3 mm in gage so as to give a dry coating thickness of 20 *µ*m and baked at 230°C for 30 seconds.

### Precoating Example 2 (E2)

The procedure of Precoating Example 1 was repeated except that the carbodiimide solution obtained in Synthesis Example 2 was used.

### Precoating Example 3 (E3)

The procedure of Precoating Example 1 was repeated except that the carbodiimide solution obtained in Synthesis Example 3 was used.

### Precoating Example 4 (E4)

The procedure of Precoating Example 1 was repeated except that the carbodiimide solution obtained in Synthesis Example 4 was used.

### Synthesis and Precoating Example 1 (E5)

Reaction was effected on 671 grams of m-tetramethylxylylene diisocyanate in the presence of 6.71 grams of a carbodiimidizing catalyst (3-methyl-1-phenyl-2-phospholene-1-oxide) at 180°C until an isocyanate concentration of 3.74% was reached. Then 192 grams of polyethylene glycol monomethyl ether having a degree of polymerization of 8 was added to the reaction product, and the reaction solution was agitated at 100°C for about 5 hours until the isocyanate was extinguished. The resulting carbodiimide compound, 100 grams, was dissolved in 100 grams of dimethylformamide (DMF) to form a carbodiimide solution. Using this carbodiimide solution, the procedure of Precoating Example 1 was repeated.

### Synthesis and Precoating Example 2 (E6)

Reaction was effected on 245.6 grams of 4,4'-dicyclohexylmethane diisocyanate in the presence of 2.46 grams of a carbodiimidizing catalyst (3-methyl-1-phenyl-2-phospholene-1-oxide) at 180°C until an isocyanate concentration of 9.75% was reached. Then 192 grams of polyethylene glycol monomethyl ether having a degree of polymerization of 8 was added to the reaction product, and the reaction solution was agitated at 100°C for about 5 hours until the isocyanate was extinguished. The resulting carbodiimide compound, 100 grams, was dissolved in 100 grams of DMF to form a carbodiimide solution. Using this carbodiimide solution, the procedure of Precoating Example 1 was repeated.

### Comparative Example 1 (CE1)

The procedure of Precoating Example 1 was repeated except that the carbodiimide solution was omitted.

The precoated steel sheets were examined by the following tests.

### Adhesion

After a precoated steel sheet was allowed to stand at 20°C for one hour, it was subject to the cross-cut test of JIS K-5400 by scribing the coating to define 100 sections of 1 cm x 1 cm, placing adhesive tape on the scribed coating, applying an appropriate pressure to establish a firm bond, and peeling the adhesive tape off in an instant. The number (n) of coating sections left on the steel sheet was counted. The result is expressed in terms of n/100 as an index of adhesion.

### Solvent resistance

A precoated steel sheet was rubbed 100 strokes with gauze impregnated with xylene solvent. The coating surface was visually observed to find defects including peel, scratches and delustering. A defective coating was rated "X" (rejected) and a sound coating was rated "O" (passed).

### Acid resistance

A precoated steel sheet was dipped in 5% by weight aqueous hydrochloric acid solution at 20°C for 24 hours. After washing with water, the coating surface was visually observed to find defects including peel, scratches and delustering. A defective coating was rated "X" and a sound coating was rated "O."

### Alkali resistance

A precoated steel sheet was dipped in 5% by weight aqueous NaOH solution at 20°C for 24 hours. After washing with water, the coating surface was visually observed to find defects including peel, scratches and delustering. A defective coating was rated "X" and a sound coating was rated "O."

### Stain resistance

A precoated steel sheet with lines drawn on the coating surface with red ink was allowed to stand for 24 hours. The coating surface was wiped with gauze impregnated with ethanol. The coating surface was visually observed to find the traces of lines. A traced coating was rated "X," a slightly traced coating was rated "Δ," and a trace-free coating was rated "O."

### Water resistance

A precoated steel sheet was dipped in a constant temperature water bath at 50°C for 10 days. The coating surface was visually observed to find defects including delustering and blisters. A defective coating was rated "X" and a sound coating was rated "O."

### Pencil hardness

A scratch test was done at 20°C using a pencil "Uni" commercially available from Mitsubishi Pencil K.K. The result was expressed by a pencil hardness one rank lower than the pencil hardness with which the coating was scratched.

The results are shown in Table 1.

**Table 1**

| | E1 | E2 | E3 | E4 | E5 | E6 | CE1 |
|---|---|---|---|---|---|---|---|
| Adhesion | 100 | 99 | 99 | 96 | 97 | 98 | 92 |
| Solvent resistance | O | O | O | O | O | O | X |
| Acid resistance | O | O | O | O | O | O | X |
| Alkali resistance | O | O | O | O | O | O | X |
| Stain resistance | O | O | O | O | O | O | X |
| Water resistance | O | O | O | O | O | O | X |
| Pencil hardness | 2H | 2H | 2H | 2H | 2H | 2H | 2H |

As is evident from Table 1, the coatings on sheet metal produced in accordance with the first part of the process of the invention are satisfactory in all the tests of adhesion, solvent resistance, acid resistance, alkali resistance, stain resistance, and water resistance.

Although some preferred embodiments have been described, many modifications and variations may be made thereto in the light of the above teachings. It is therefore to be understood that within the scope of the appended claims, the invention may be practiced otherwise than as specifically described.

## Claims

1. A method of manufacturing a shaped coated iron or stainless steel artefact comprising
applying a coating composition comprising a resin having
an ester group in a molecule, at least one of mono- and poly-carbodiimide compounds, and a solvent to an iron or stainless steel sheet to form a pre-coated sheet; and
mechanically working said pre-coated sheet by die pressing, bending, embossing, rolling or drawing.

2. A method according to claim 1 wherein said coating composition contains 100 parts by weight of the ester group-containing resin and 0.01 to 20 parts by weight of the carbodiimide compound.

## Patentansprüche

1. Verfahren zur Herstellung eines geformten beschichteten Eisen- oder Edelstahl-Artefakts, umfassend:
das Auftragen einer Beschichtungszusammensetzung, die ein Harz mit einer Estergruppe pro Molekül, zumindest einer von Mono- und Polycarbodiimidverbindungen und ein Lösungsmittel umfasst, auf ein Eisen- oder Edelstahlblech, um ein vorbeschichtetes Blech zu bilden; sowie
das mechanische Bearbeiten des vorbeschichteten Blechs durch Warmpressen, Biegen, Formstanzen, Walzen oder Ziehen.

2. Verfahren nach Anspruch 1, worin die Beschichtungszusammensetzung 100 Gewichtsteile des Estergruppe enthaltenden Harzes und 0,01 bis 20 Gewichtsteile der Carbodiimidverbindung enthält.

## Revendications

1. Méthode de fabrication d'un objet façonné en fer ou en acier inoxydable enrobé configuré comprenant
l'application d'une composition de revêtement comprenant une résine ayant un groupe ester dans une molécule, au moins l'un des composés mono- et polycarbodiimides, et un solvant, à une tôle en fer ou en acier inoxydable pour former une tôle pré-enduite; et
le travail mécanique de ladite tôle pré-enduite par moulage sous pression, cintrage, bosselage, laminage ou étirage.

2. Méthode selon la revendication 1 où ladite composition de revêtement contient 100 parties en poids de la résine contenant un groupe ester et 0,01 à 20 parties en poids du composé de carbodiimide.
